# EUROPEAN PATENT APPLICATION

(11) **EP 2 002 886 A1**
(43) Date of publication of application: **17.12.2008**
(21) Application number: 07009227.5
(22) Date of filing: 08.05.2007
(51) Int. Cl.: B01J 19/00, C40B 50/14, C40B 60/02

(54) **Coating platform and process for the preparation of thin coatings**

(71) Applicant: HTE Aktiengesellschaft The High Throughput Experimentation Company, 69123 Heidelberg (DE); FLAMAC, 9052 Zwijnaarde (BE)
(72) Inventor: Zech, Torsten, Dr., 69124 Heidelberg (DE); Hoffmann, Heiko, 75031 Eppingen (DE); Matthes, Volker, Dipl.-Ing., 69124 Eppelheim (DE); Güllich, Frank, 69207 Sandhausen (DE); Vietze, Uwe, Dr., 69214 Eppelheim (DE); Födisch, Ringo, Dr., 69181 Leimen (DE); Schrapel, Thomas, Dr., 68723 Plankstadt (DE); Sundermann, Andreas, Dr., 64625 Bensheim (DE); Reichardt, Jan, 69168 Wiesloch (DE); Desie, Guido, Dr., 3020 Veltem-Beisem (BE); Hörzenberger, Franz, 9960 Assenede (BE); Paul, Johan, Dr., 1853 Strombeek-Bever (BE)
(74) Representative: Tostmann, Holger Carl

(57) **Abstract**

The application of coatings on the surface of a substrate is of high commercial interest. The present invention relates to a platform for rendering the development of surface coatings more efficient and bringing the development and testing cycle closer to industrial manufacturing reality.
For this, the coating platform according to the present invention for the automated preparation and curing of a plurality of coatings on a plurality of substrates at least comprises: (i) at least one substrate handling module for handling the plurality of substrates before and after the coating process, whereby the substrate handling module preferably comprises at least one means for reading identification codes on substrates; (ii) at least one coating module (30) comprising at least one coating tool for applying a shear force onto a formulation as applied onto the substrate and/or as being in physical contact with said substrate; (iii) at least one transfer module for the transfer of a plurality of coated and/or uncoated substrates from one part of the coating platform to at least one other part and (iv) at least one means for drying (40,40') and/or curing (50,50') the plurality of coated substrates.

## Description

The application of coatings on the surface of a substrate is of high commercial interest. The present invention relates to a platform for rendering the development of surface coatings more efficient and bringing the development and testing cycle closer to industrial manufacturing reality.

The process of preparing surface coatings in research laboratories, pilot operations, materials testing and small-scale manufacturing is often restricted to semi-automated methods. For example, a coating process can be performed with a coating apparatus that comprises a (manually operated) coating knife. These coating instruments as commercially available are not integrated into an automated workflow.

An article by Ortmeier et al (J. Ortmeier, S. Ansorge, H. Kost; Farben und Lacke 2007 (2) S. 35 - 38) describes a high throughput formulation platform, which has a module that can be used for the coating of substrates. According to said article, substrates are coated by pneumatic spray coating as partially integrated into an automated workflow.

EP 1 243 409 A2 relates to a combinatorial preparation method of surface coatings for the development of new materials whereby different layers are applied onto the substrates. As a general method for coating, the use of a coating knife or coating blade is mentioned. One of the experiments describes in detail an ink-jet coating process, while the other experiments do not specify the method that was used for the preparation of the surface coatings.

In Section 3 of "Combinatorial Methods, Automated Synthesis ..." M.A.R. Meier et al. (Macromed. Rap. Comm. 2004, Vol. 25, pages 21 - 33) describe both ink jet methods and knife-edge coating devices for the preparation of combinatorial polymer libraries.

One object according to the present invention is to provide a platform and a process that allow to rapidly and reliably apply a thin coating, preferably a thin organic or inorganic or mixed organic and inorganic coating, to a substrate, within an automated workflow, preferably the workflow of a high throughput system.

In another object according to the present invention, the coated substrates should not only be processed quickly but also under conditions that are as similar as possible for as large a number of coatings as possible as to allow easy and reliable comparison of different coatings.

The coating platform according to the present invention for the automated application of at least one coating onto a plurality of substrates at least comprises:
- at least one substrate handling module for handling the plurality of substrates before and after the coating process, whereby the substrate handling module preferably comprises at least one means for reading identification codes on substrates;
- at least one coating module comprising at least one coating tool for applying a shear force onto a formulation as applied onto the substrate and/or as being in physical contact with said substrate;
- at least one transfer module for the transfer of a plurality of coated and/or uncoated substrates from at least one part of the coating platform to at least one other part;
- at least one means for drying and/or curing the plurality of coated substrates.

Preferably, the coating platform furthermore comprises:
- at least one formulation handling module for applying at least one formulation onto at least one substrate;
- at least one means for the analysis of the plurality of coated substrates;
- at least one module for performing surface activation of at least one coated substrate;
- at least one means for encoding a plurality of substrates;
- at least one control unit.

In a preferred embodiment of the present invention, the transfer system is a high speed transfer system, further preferably a high speed linear transfer system.

In a preferred embodiment of the present invention, the transfer system comprises at least one substrate holder for holding at least one substrate.

In a preferred embodiment of the present invention, the platform comprises at least one formulation handling module. Furthermore, the platform and/or the handling module preferably comprise at least one dispensing unit.

It is further preferred that at least one dispensing unit can be brought in close proximity to the substrate that is to be coated, wherein *"close proximity*" means less than 5 cm, preferably less than 2 cm, further preferably less than 1 cm, further preferably less than 5 mm.

It is further preferred that the formulation platform comprises at least two parallel dispensing units that can dispense the same formulation onto the substrate resulting in a uniformly coated substrate or that can dispense at least two different formulations onto the substrate resulting in at least two parallel stripes of different coatings on the same substrate.

In a preferred embodiment of the present invention, the coating module comprises at least two coating tools arranged in a manner, for example next to each other, that facilitates or enables the application of a plurality of parallel stripes on at least one substrate.

The process for applying a plurality of thin coatings on a plurality of substrates in an automated process comprises at least the following steps:
- providing at least one formulation, a plurality of substrates, at least one substrate handling module, at least one coating module comprising at least one coating tool, at least one transfer system and at least one means for drying and/or curing a plurality of coated substrates.
- executing at least one cycle of coating a plurality of substrates comprising the sub-steps of
   ■ applying at least two formulations onto at least one substrate, or applying at least one formulation onto at least two substrates;
   ■ drying of the applied coatings, preferably in at least one IR drying unit;
   ■ optional curing of the applied coatings in at least one UV curing unit;
- application of at least one identification code on at least one coated substrate;
- optional storage of coating process parameters including assigned identification codes, in a control unit.

In a preferred embodiment, the process further comprises at least the following step:
- implementing a virtual design of a library of coated substances using at least one control unit;

The process according to the present invention preferably additionally comprises at least one experimental design step and/or at least one data management step.

During the design phase (creation of a virtual library of substrates), a number of prototyping experiments may be preferably carried out to determine, for example, the best coating tool to be used.

The virtual design of the library preferably comprises the generation of coating recipes and the importation of selected coating recipes into at least one job that is to be executed by the platform.

In the platform and the process of the present invention, the coating is preferably organic or inorganic or any mixture of both (for example an organic polymer comprising inorganic pigments).

Preferably, coating tools are automatically exchanged and/or cleaned between cycles of coating.

Coating tools that comprise means for adjusting the distance between the coating tool and the substrate are also part of the present invention. An adjustable coating tool may minimize the need to change coating tools.

The platform and the process of the present invention preferably comprise a control unit, which enables a user to perform research and development on coatings in a more efficient and time saving manner. The control unit preferably includes, among others, a user interface, a database and/or processing and controlling unit for the coating platform. In particular, the time period between coating and/or heating/drying and/or curing can be controlled by the above-referenced control-unit.

In the context of the present invention, a "*control unit*" comprises hardware, software or both. The control unit implements user input to operate and/or control the formulation platform of the present invention.

In a preferred embodiment of the present invention, the control unit is used to create a virtual library of coated substrates. The coating platform therein preferably automatically executes a user-defined workflow and converts the virtual library into a physical library of coated substrate samples.

The coating platform is preferably constructed in a modular manner thus allowing the platform to be integrated into more complex workflows. According to these more complex workflows, the coating platform preferably includes a formulation module, which is used for developing and preparing viscous fluids which are then used to coat the surfaces of the substrates.

Besides being able to integrate the platform in more complex workflows, the modularity of the platform has the advantage that it provides high flexibility in such a way that individual modules may be exchanged with and/or added to existing modules. For example, it is conceivable to easily install an additional module for the pre-treatment of substrates (e.g. atmospheric plasma, ...).

A further particular advantage of the present invention is that all relevant coating conditions and parameters may be recorded and stored during the coating process.

Using the platform including the control unit of the present invention, it is possible to coat and cure the substrates under conditions, which are closely related to conditions of an up-scaled process in an industrial production environment. Hence, the present invention enables the user to improve the implementation of research results for industrial applications.

The coating platform according to the present invention is specially suited for research applications since it allows an improved development of coatings, preferably by inline coupling of coating application and curing modules with a high-speed transfer system and/or by bringing the formulation handling module, in particular a dispensing unit thereof, in close proximity to the substrate thus allowing industrial-type reaction, drying and curing times.

The present invention also comprises the use of the platform and/or the process to apply at least one thin film, preferably a thin organic film, on a plurality of substrates.

In the context of the present invention, the term "automated" means that at least one step performed on and/or with the platform is not performed manually but under the control of a control unit. This does not exclude, however, that certain operations may still be performed by hand.

### Brief Description of the Figures:

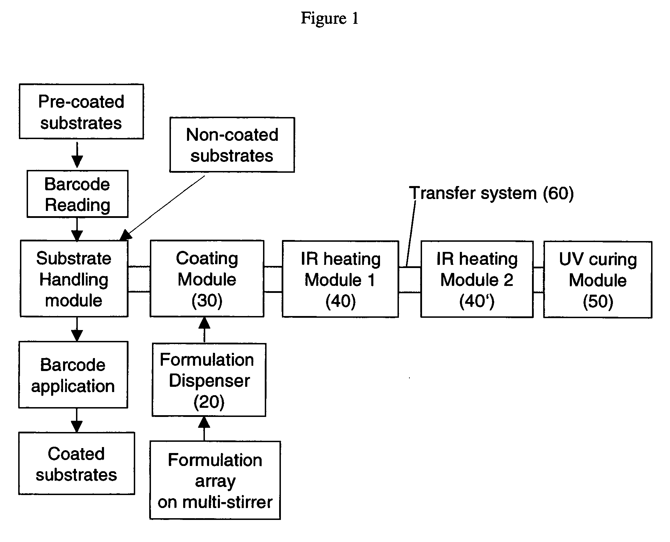

- Figure 1: shows a flow chart of a preferred coating operation using the coating platform according to the present application;
- Figure 2: shows a three-dimensional view of a preferred embodiment of the coating platform which is equipped with two IR heating modules (40, 40') and two UV curing modules (50, 50');
- Figure 3: shows a schematic top-view of the coating platform of Figure 2;
- Figure 4: shows a three-dimensional view of a preferred coating platform comprising a formulation handling module (20), coating module (30), IR heating modules (40, 40') and UV curing modules (50, 50'), which are connected by a transfer system;

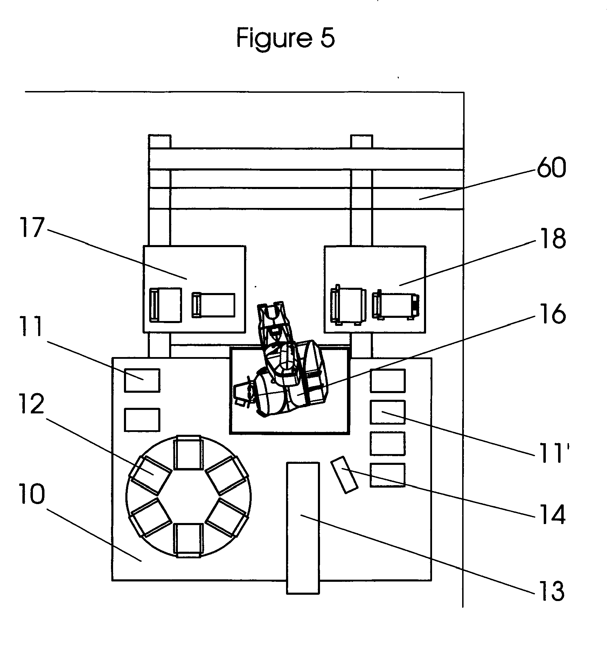

- Figure 5: shows a top-view of a preferred embodiment of the substrate handling module (10) which is equipped with a robot arm (16) and which is connected to a transfer system (60). The transfer system comprises a first substrate holder (17) in an active position and a second substrate holder (18) in a parking position;

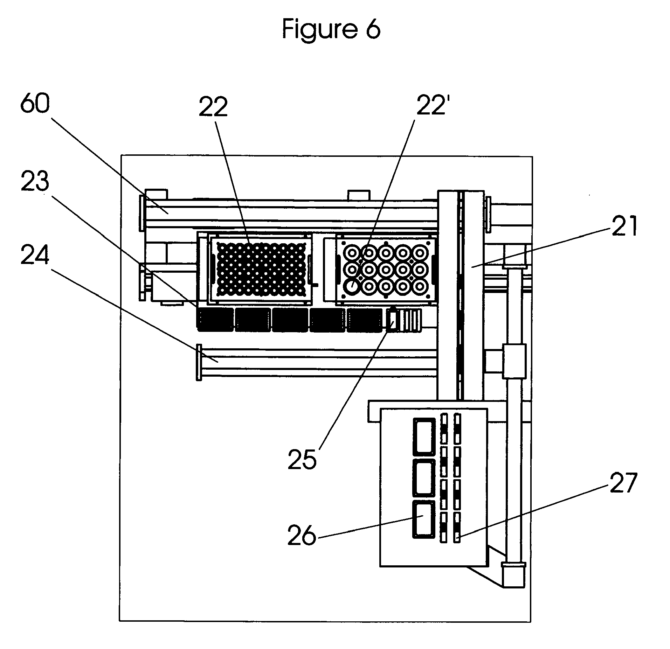

- Figure 6: shows a top-view of a preferred embodiment of the formulation handling module (20), which is equipped with a liquid dispenser (21) and two positioning racks (22, 22');
- Figure 7: shows a partial view of a preferred embodiment of the coating module (30) which is equipped with a coating tool (33) that has (in this embodiment) six different coating rolls (34);
- Figure 8.a: shows a preferred coating tool (33), which contains six coating blades (304) whereby distance spacers (303) (preferably made of rubber) are fixed between the blades. Said coating tool (33) may be used for the production of substrate coatings with six different stripes. At the top of the coating tool is a protrusion (301) that fits into the reception of a holder (32);

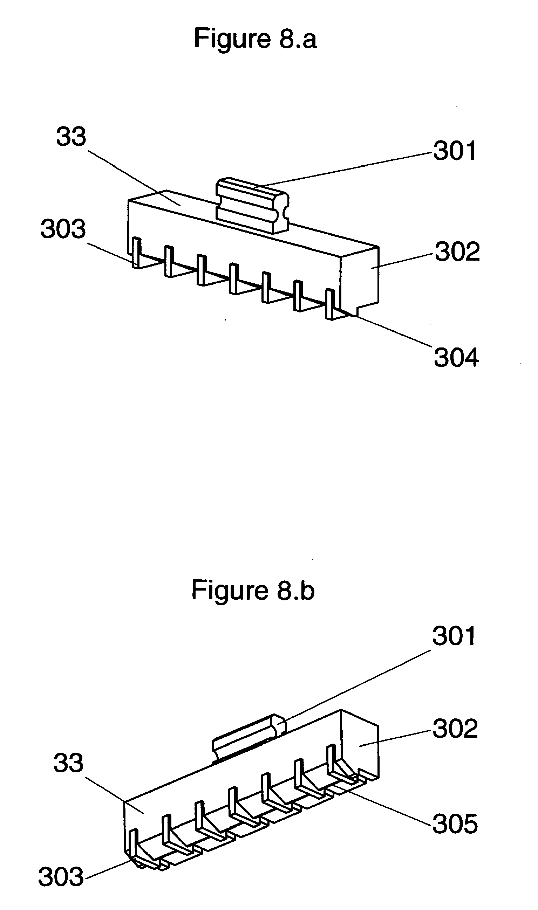

- Figure 8.b: shows the coating tool (33) of Figure 8.a from a different perspective. The coating tool (33) has metal edges (305) that are in physical contact with the substrate during the coating process;

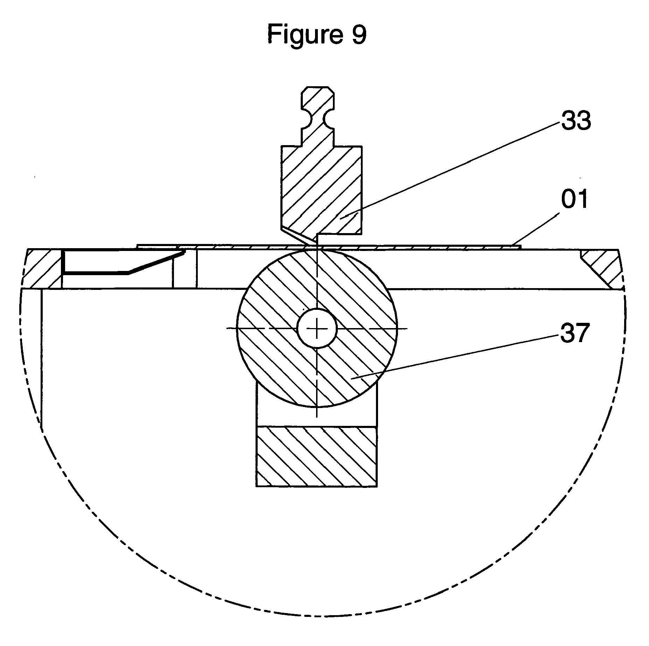

- Figure 9: shows the cross section of a blade coating tool (33) as placed on the top of a substrate (01). In this preferred embodiment, the substrate is supported by a supporting roll (37);

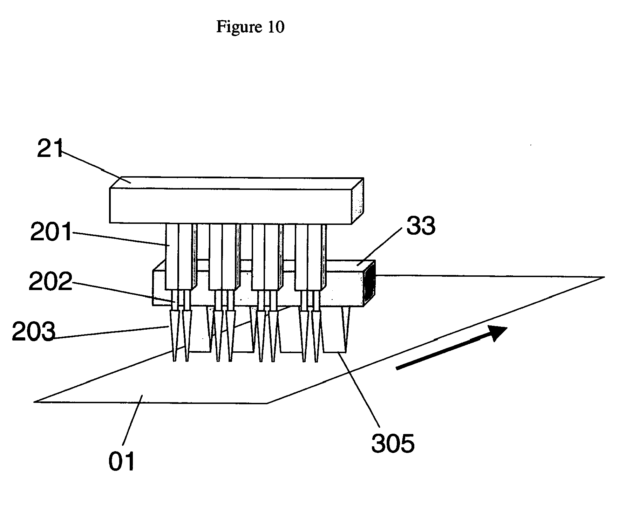

- Figure 10: shows a preferred embodiment of a dispensing tool (21) according to the present invention having two bundled dispensing units (201) per coating stripe to be applied onto the substrate (leading to four stripes in this case); this Figure also shows that the dispensing units are placed in close proximity to the substrate surface;

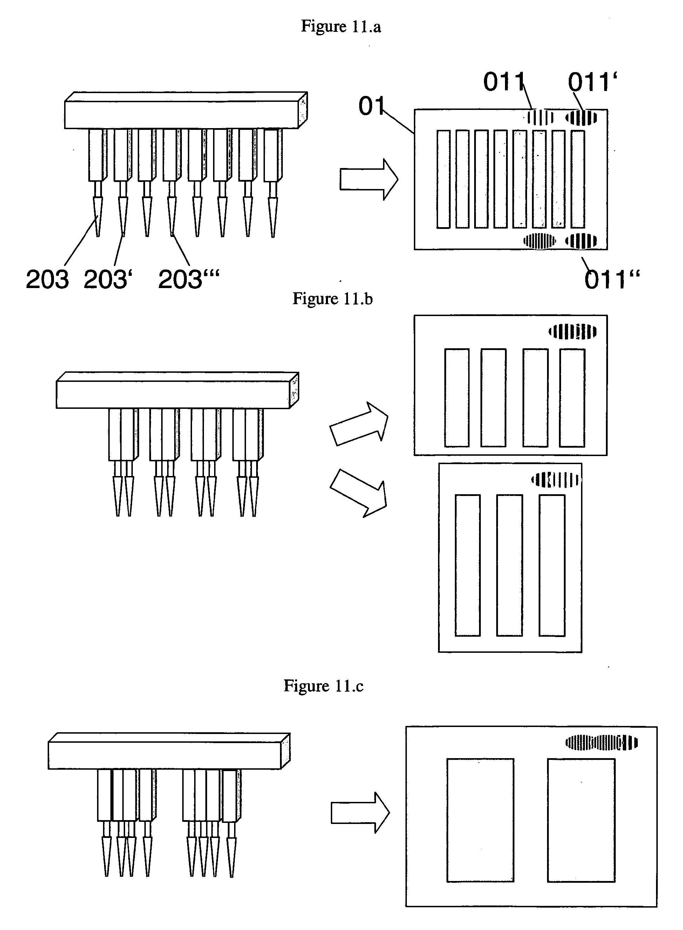

- Figure 11: shows how different stripes can be created on a substrate using different arrangements of dispensing units; the possibility to apply various encodings (barcode) is also shown;

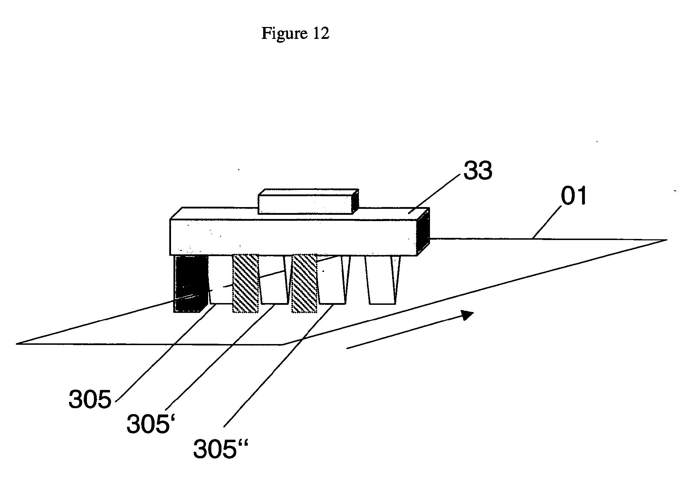

- Figure 12: essentially corresponds to Figure 8 showing a preferred coating tool of the present invention;

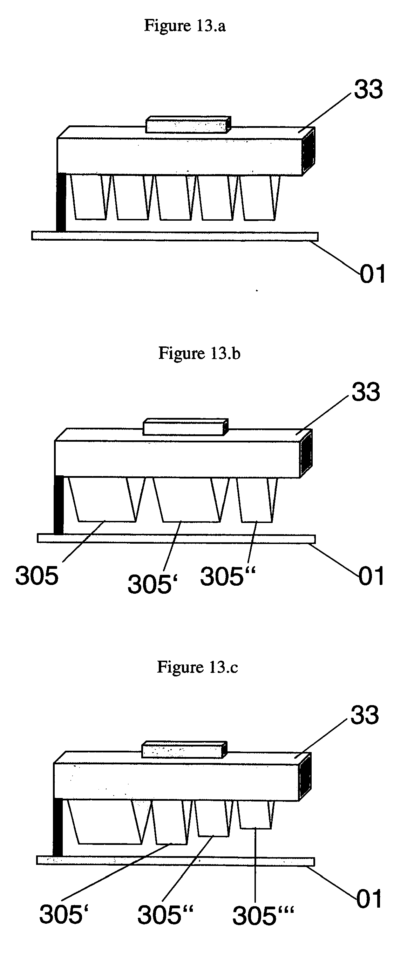

- Figure 13: shows various combinations of coating blades (305) of a coating tool (33) allowing to realize different film thicknesses in adjacent (parallel) stripes on one substrate.

In the context of the present invention, a *"substrate"* is understood to mean any structure that accommodates a formulation that may be applied as a spray, powder, liquid, viscous mass or the like.

According to a preferred embodiment, a substrate is a plate or sheet, which has defined dimensions whereby the plate or sheet acts as the recipient for the formulations. In a preferred embodiment the plate or sheet has a rectangular shape whereby the surface of the plate or sheet preferably has an area in the range from 1 x 2 cm² to 20 x 40 cm², preferably the area ranges from 2 x 4 cm² to 10 x 20 cm².

The thickness of the substrate depends on the type of the material as well as the intended application. In a preferred embodiment, the coating platform is capable of handling substrates having a thickness in the range from 10 µm to 10 mm, preferably form 10 µm to 1000 µm, further preferably from 50 µm to 500 µm.

The flatness of the substrate surface is a relevant parameter for substrate handling and coating. The higher the flatness of a substrate, the better the handling and coating process will work. It should be avoided that the substrates exhibit irregularities in thickness or deformations at the edges. In a preferred embodiment according to the present invention, the substrate is essentially flat, further preferably flat. It is further preferred that the surface roughness is below 250 µm, further preferably below 100 µm, further preferably below 50 µm, further preferably below 10 µm, further preferably below 5 µm. A preferred way to measure surface roughness and arrive at aforementioned numerical values is the 1997 ISO 4287 standard (Rₐ-values).

While all surfaces can be used in principle, preferred surfaces are glass, paper, cardboard, in particular plasticized cardboard, polymer materials in general, metal surfaces, oxide surface, silicon and composite materials. Examples for preferred substrate materials are aluminium, steel, silicon, wood, paper, polyethylene polymers, polypropylene polymers, polyvinylchloride polymers, polyester polymers (PE, PP, PVC etc.), polycarbonates, inorganic polymers, organic polymers, synthetic polymers or natural polymers.

The substrates coated in accordance with the present invention can be the same or can be different. The substrate can be rigid or flexible, while a rigid substrate is preferred.

In the context of the present invention, a *"thin"* film is a film that has - after coating and drying and/or curing - a thickness of less than 5 mm, preferably less than 1 mm, further preferably less than 500 µm further preferably less than 100 µm, further preferably less than 50 µm, further preferably less than 10 µm.

In the context of the present invention, a "*plurality*" of substrates means at least 10 substrates, preferably at least 100 substrates, further preferably at least 200 substrates.

In the context of the present invention, a "*formulation*" used for the coating of a substrate is any material or substance or mixture that can be applied, delivered, deposited or otherwise transferred onto the surface of the substrate. The formulation is preferably capable of being spread into a thin, cohesive film by means of applying a shear force with at least one coating tool.

It is preferred that the formulation as applied/delivered /deposited/transferred is a liquid or comprises a liquid/viscous/spreadable component. The liquid formulation may be Newtonian or non-Newtonian. In principle, any formulation can be applied /delivered/deposited as long as it leads to thin cohesive film after curing. Any mixture of solids and liquids may also be applied.

In the context of the present invention, "(*en)coding*" means to apply any conceivable type of labelling that allows to automatically discern or discriminate one (coated) substrate from the other and/or to track a coated or uncoated substrate, a coating tool, a formulation (as contained in a vessel or the like) or any other device or material used on the platform.

In a preferred embodiment, the platform comprises at least means for (en)coding and at least one corresponding means for reading the (en)coding. Barcode encoding and reading is particularly preferred.

In the context of the present invention, *"high speed'* processing means that at least one, preferably all of the following processing conditions are being met:
(i) a transfer velocity of a (coated or uncoated) substrate from at least one unit of the platform to at least one other of at least 1 m/s;
(ii) a transfer time between coating and drying of no more than 15 sec, preferably no more than 5 sec, further preferably no more than 1 sec;
(iii) an acceleration of the drive of the transfer system of at least 2 g.

In the following, particularly preferred embodiments of the coating platform and of the process for the preparation of thin coatings are described.

Preferably, the step of applying at least one formulation (i.e. the coating step) comprises at least one of the following: rod coating, blade coating, knife coating, air knife coating, gravure coating, forward and reverse roll coating, extrusion coating.

The formulation(s) may be applied over the full width of the substrate or (only) at predetermined regions of the substrate.

In a preferred embodiment, the formulation is deposited onto the substrate in the form of stripes.

According to a preferred embodiment of the present invention, it is possible to vary the number of stripes, which are coated onto the substrate.

In a preferred embodiment of the present invention, the substrate has a rectangular or square shape for applying two or more stripes.

In a preferred embodiment of the process according to the invention, coatings are applied as at least two parallel stripes onto one substrate. Four or more parallel stripes on one substrate are preferred. Six or more parallel stripes are particularly preferred. Therein, it is preferred that the coatings of the adjacent (parallel) stripes differ in respect to at least one property. While differences in composition and/or chemical makeup are particularly preferred, other differences, such as differences in film thickness, differences in regard to processing (exposed to different coating or curing conditions) are also preferred.

In the platform according to the present invention, the coating tool preferably has two or more coating blades or coating rolls, further preferably being separated by an elastic material in order to achieve the aforementioned stripes.

Preferred arrangements of coatings on a substrate are (see also Figure 11), for example:
a) six parallel stripes in landscape mode,
b) four parallel stripes in portrait mode,
c) full width in landscape mode, and
d) fill width in portrait mode.

The specific arrangement of the stripes on the substrate depends on boundary conditions such as the mechanical needs for handling and holding the substrates. An exemplary arrangement has a centerline distance of 20 mm between two adjacent stripes and a stripe width of 14 mm to allow a homogeneous stripe area of a width of 10 mm.

An advantage of the present invention is the flexibility of the coating module. Parallel stripes can be applied simultaneously whereby all stripes on one substrate are then processed in an efficient and reliable manner under the same conditions thus allowing or facilitating direct compatibility without having to take into account differences induced by variations in processing.

Depending on the thickness of the substrates, 10 to 100 or more substrates may be coated automatically during a single (complete) program cycle. Such a single program cycle will be referred to as a "job" hereinafter. If, for example, six different stripes of a coating are applied on each substrate, 600 coating stripes can be prepared, wherein each of the stripes may vary in composition.

In one embodiment of the present invention, preparative steps to be executed before starting the actual coating process preferably include at least one of the following:
- preparation of coating formulations;
- preparation of substrates to be coated;
- preparation of coating tools;
- adjusting potentially non-computer-controlled parameters (such as IR distance, UV bulb etc)..

In a preferred embodiment, the coating module comprises means to apply the formulation(s) to the substrates, in particular dispensing units, and preferably also includes means for exchanging and cleaning at least one coating tool.

Alternatively or additionally, the means to apply the formulation may also be a part of the formulation handling module.

Overall, it is preferred that the coating platform comprises at least one means to apply at least one formulation. Preferably said means is a dispensing and/or pipetting unit.

In a preferred embodiment, the coating platform comprises at least one means for drying and/or at least one means for curing. Without loss of functionality, the means for drying/curing can be seen as individual (separate) units or as being an integral part of the coating module.

No restrictions exist in regard to the means for drying as long as said means allow to remove, at least partly, solvents, in particular water, from a coating as applied onto a substrate. Drying by means of radiation, convection heating (air drying), resistance heating, induction or the like is preferred. Any combination of heating mechanisms and/or devices is possible. preferably, the means for heating comprises temperature and/or rate of heating control.

In a preferred embodiment, the means for drying is an IR heating unit. The IR heating unit allows for a fast drying of the coatings.

In a preferred embodiment, the drying and/or curing means is/are in line with the transfer module in such a way that the substrates can be transferred from coating to curing at high velocity in an essentially linear direction. The high velocity of handling and transferring substrates does not only give rise to high throughput with respect to the preparation of coated samples but also allows the whole system to operate under conditions which are similar to that of an industrial production process. An industrial production process is typically characterized by short handling times.

Preferably, the at least one means for curing is a UV curing unit, i.e. a unit that comprises a UV-light source for the curing of the coating. Such a UV-light curing is particularly preferred if thin organic films are coated. In case only or mostly inorganic materials are applied, drying and/or heating at elevated temperatures may suffice.

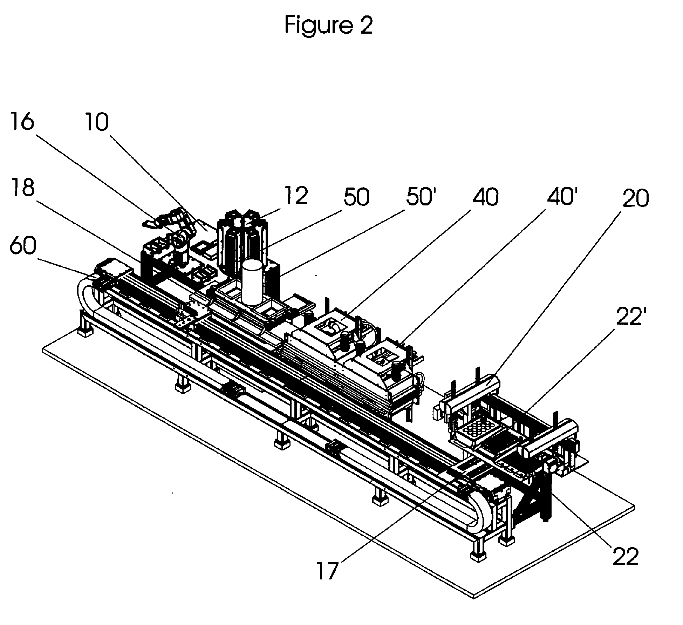

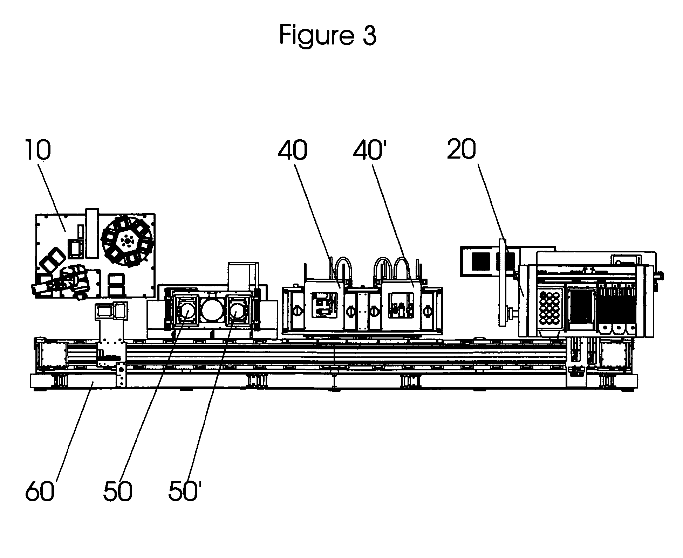

A general overview of the platform design is shown in Figure 2 and a top-view is shown in Figure 3. Due to the modular character of the set-up, it is possible to arrange the positions of the individual modules in different ways and to install the platform in different locations taking account of the space that is available in any specific location.

Prior to coating, the substrates are preferably provided in stacks as arranged on the platform. Further preferably, the substrate handling module, preferably a handling robot that is part thereof is programmed to pick the uppermost substrate from said stack. In another preferred embodiment, a vacuum gripper is used to handle a plurality of substrates.

It is preferred that a control unit controls the gripping or handling process. Furthermore it is preferred to store un-coated substrates in a substrate magazine.

In a preferred embodiment, a substrate magazine (12) is used as a holder for the substrates *after* the coating process. Said magazine has a suitable geometry that prevents the coated substrates from being in direct contact with each other. In a preferred embodiment, the magazine is designed for the storage of up to 100, further preferred of up to 500 coated substrates.

It is preferred that the substrates stored in a magazine are rigid. The number of empty positions in the magazine will accordingly limit the number of rigid substrates that can be processed within one job cycle.

Flexible substrates will preferably be stored in a stack after coating. To prevent the coated area of one substrate from being in direct contact with the backside of another substrate it is preferred to place a protection sheet between the two substrates in this case.

In a preferred embodiment, the substrate handling module comprises an articulated robot, a stack area with one or more stacks for un-coated and coated substrates, a magazine for coated and uncoated substrates, a barcode applicator and a barcode reader. As the articulated robot, a Stäubli TX40 can be used, for example.

In a preferred embodiment, the robot is equipped with a vacuum gripper to process substrates. The use of such vacuum gripper is the most preferred method for handling flexible substrates. Rigid substrates may also be handled with a vacuum gripper. In a preferred embodiment, the gripping surface of the vacuum gripper is made of silicone. Such a surface is able to handle different substrates at temperatures of up to 200°C. The gripping surface of the vacuum gripper preferably comprises small cavities, which have a diameter of 4 to 8 mm and act as sucking nozzles. The surface of the vacuum gripper is preferably adapted to comply with the dimensions of the substrate in such a manner that the cavities and the surrounding area are only in contact with that part(s) of the substrate that will not be coated during the coating process.

The transfer module preferably connects the different other modules of the platform and allows the high-speed processing of the substrates. The substrates are preferably held by at least one substrate holder(s) of the transfer module.

In a preferred embodiment according to the present invention, the transfer module comprises a single track and/or comprises a direct linear drive technology ("Linearantrieb"). This allows high acceleration rates and high velocities (more than 1 m/s, preferably more than 2 m/s), which are needed for the processing of the substrates to mimic industrial conditions (short reaction times, short drying times, short curing times).

Furthermore, several motors, each carrying a substrate holder, can preferably be arranged on the same drive. This flexibility is preferred because of the different requirements in regard to rigid versus flexible substrates.

The transfer module can preferably be operated in two directions, preferably in the 180° mode, i.e. the substrate holder can travel bi-directionally, allowing flexible processing schemes especially for a sequence of treatment steps, such as pre-heating of a substrate in an IR unit, coating, IR drying, UV curing and a final IR drying step.

The transfer module preferably has a transfer speed from the coating module to the drying or curing module in the range from 10⁻³ m/s to 10 m/s, preferably in a range from 0.1 m/s to 2 m/s, and further preferably in a range from 0.5 m/s to 1 m/s. The minimum transfer time between coating and drying is preferably 0.5 s (which is close to the transfer time of many industrial coating processes).

The time between the dispensing of the formulation droplets onto the substrate and the distribution of the formulation with the coating knife is controllable and is preferably as short as 10⁻³ s (i.e. is preferably in the range of 1 to 10 milliseconds).

Based on the dynamic range of the preferred linear drive technology, it is possible to vary the velocity of the substrate during processing, i.e. the substrate can reach and proceed through the first IR unit at a different speed than at an optional second IR unit. Therefore, different residence times are preferably achieved in various processing steps.

Another advantage of the linear drive technology is also the minimization of residual vertical movements during transfer (as typical for nonlinear drive technologies). This also beneficially affects the quality of the surface coating.

According to a preferred embodiment, the total length of the transfer module is up to 3 m, preferably up to 6 m. The draglines of the drives are preferably arranged below the track in order to achieve a compact design. The transfer system preferably moves the substrate holder without transferring vibrations onto the substrate holder.

The substrate holder (17) fulfils at least one, preferably all, of the following requirements:
(i) the holder is capable to hold rectangular shaped substrates in both portrait and landscape mode;
(ii) the holder includes means for holding the substrates in place, for example mechanical means such as clamps or vacuum means;
(iii) the substrates are preferably supported at their backside during the coating application in order to prevent the substrates from being bent down by the force of the coating tool; such a support is preferably a supporting roll (37).

During (fast) IR drying, each substrate preferably only has point contact with the holder in order to avoid temperature differences within the substrate thus achieving high heating rates.

The holder preferably consists of a material that is resistant under the process conditions in the drying module (high temperature) and/or the curing module (UV radiation). The mass of the substrate holder should be as low as possible to allow good processing dynamics.

According to a preferred embodiment, the coating platform is equipped with two or more separate substrate holders thus allowing for a variable positioning of the substrate, for example so that the substrates can be placed in the portrait or in the landscape mode. The substrate holder may comprise parking positions (18) at both ends of the transfer module.

According to a preferred embodiment, the at least one substrate holder fulfils at least one of the following properties, preferably all of the following properties:
(i) the holder is constructed so that the substrates will be held by a mechanical clamping mechanism;
(ii) the substrates only have point contact with the holder;
(iii) the substrates are supported by a support roll (37) during coating (see Figure 9);
(iv) the substrate holder allows backside heating of the substrate whereby such holder is preferably used for metal substrates that need to be dried with high heating rates.

In a preferred embodiment, the at least one, preferably the second of at least two substrate holder(s) has at least one of the following properties:
(i) the substrate(s) is/are held with a gripper by applying vacuum forces;
(ii) sucking nozzles of vacuum cavities are located outside the area of the substrate;
(iii) preferably the holder is constructed in such a way that the substrate(s) has/have area contact with the holder.

Components and areas of the substrate holder which are exposed to high temperatures are made preferably of ceramics, the use of which allows to reduce potential temperature gradients during the drying process.

Heat conductivity of suitable substrate materials for the substrate holder is preferably low. This type of substrate holder is preferably used for flexible substrates and for brittle substrates such as glass.

In a preferred embodiment, the substrate holder may contain supplies for auxiliary lines such as pressurized air for clamping, vacuum for the vacuum table, cooling water to avoid a heat-up of the holder, connections for thermocouples etc.

In a preferred embodiment of the process of the present invention, the operation of the **substrate handling module** using the substrate holder of the present invention preferably comprises at least one, preferably all, of steps 1 to 7:
1. picking a substrate from storage, wherein
   a) at least one un-coated substrate is either picked from a stack or from a magazine, or
   b) at least one pre-coated substrate is picked from a magazine;
2. reading the encoding on the pre-coated substrate, if any;
3. placing at least one substrate on the corresponding substrate holder in a predetermined position;
4. after coating, at least one coated substrate is picked-up from the substrate holder;
5. a new barcode is applied to the coated substrate;
6. the new barcode is read for verification purposes;
7. storing of the coated substrate, wherein
   a) a rigid substrate is placed in the magazine, if necessary, or
   b) if the substrate is flexible or if the thickness of the substrate is too thick, the substrate is placed in a stack on top of the previous substrate.

An exemplary workflow is described in the following: Substrates are coated by using a dispensing arm with eight pipetting needles. One substrate is coated with six parallel stripes which have different composition. The six different formulations are simultaneously spread onto the substrate by dispensing the formulations using six dispensing needles. A similar workflow may be performed to generate four parallel stripes having different composition by using four needles, respectively. Alternatively, it is possible to use, for example, eight needles for applying the formulation(s) onto the substrate.

Full width stripes, i.e. stripes covering the substrate with one and the same coating, are preferably generated using multiple dispensing units containing the same formulation or one single dispensing unit.

Using the **formulation handling module** of the present invention, formulations can be applied to the substrate(s) by every conceivable coating process such as spray coating, sputtering, electrochemical deposition, ink jet printing or dispensing with a pipetting robot.

In a preferred embodiment, the formulation(s) is/are dispensed onto the substrate.

In a further preferred embodiment, the coating of the substrates is performed by a pipetting device, preferably a robot, further preferably a robot using volume-based pipetting techniques. The formulations are preferably transferred in "aspirate" and "dispense" mode, i.e. the formulations are first aspirated by a pipetting needle with a tip and then dispensed onto the substrate.

In a preferred embodiment, the tips of the pipetting needle are disposable whereby tips can be exchanged following every dispensing step.

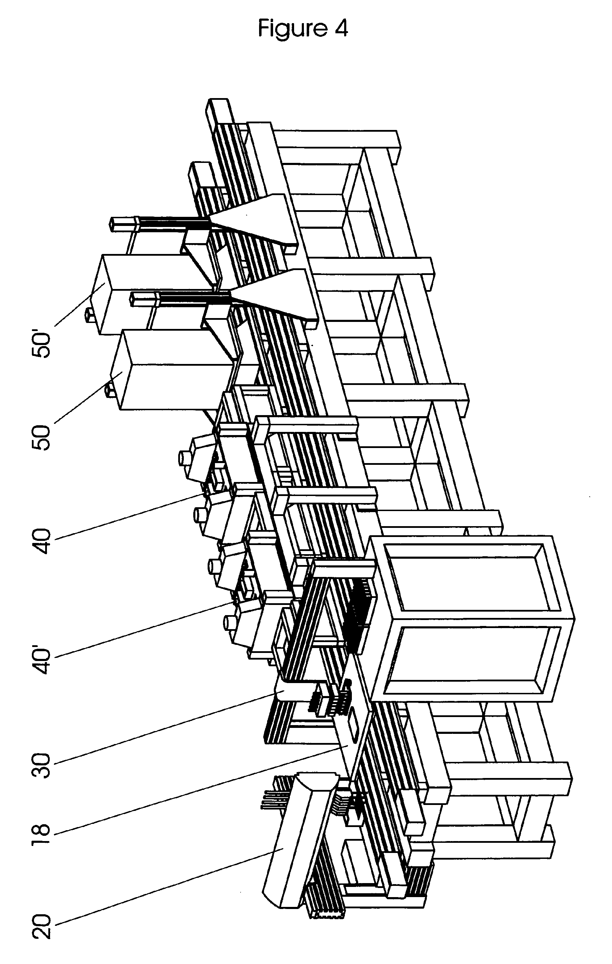

An example for a pipetting robot is shown in Figure 4, depicting a dispensing arm with four needles. The dispensing arm can be moved in different directions in space and may be equipped with suitable powerful pumps with which it is possible to handle fluids that potentially exhibit a high viscosity and/or a high resistance to fluid flow.

In a preferred embodiment, double- or multi-layers are prepared onto one substrate. In this context, it is further preferred that the substrate is turned between individual deposition steps in such a way that the stripes of at least two different layers are at least partially crossing each other. The formation of at least partially crossed stripes leads to a higher number of layers, i.e. a more layered material, and thus to an acceleration of the production process.

According to a preferred embodiment of the present invention, formulations which are used for the coatings are stored in vials or flasks which are preferably accommodated at the deck area of the formulation module.

The vials or flasks are preferably equipped with means for heating and stirring the formulations. For example, the vials which contain the formulations can be placed on stirring plates by using suitable racks. It is preferred to include means for capping and decapping of the vials which contain the formulations.

Fluid formulations are preferably characterized by their viscosity since this property determines the speed of the aspiration and dispensing of the pipetting robot. In order to improve the initial spreading of the formulation over the substrate, several droplets of formulation can be dispensed onto the substrate or parts (stripes) thereof.

According to a preferred embodiment of the present invention, viscosity, pH or conductivity measurements are used for the characterization of the applied formulations.

In a preferred embodiment of the invention, the preparation of the formulations which are applied onto the substrates is integrated within the coating platform.

In general, the substrate can be coated in both landscape and portrait mode. In regard to the stripe width, the following modes are preferred:
- Six stripes of a width of approx. 14 mm in landscape mode. The distance between the stripes preferably is approx. 3 mm.
- Four stripes of a width of approx. 14 mm in portrait mode. The distance between the stripes preferably is approx. 3 mm.
- One stripe with a width of approximately 100 mm in landscape mode.
- One stripe with a width 65 mm of in portrait mode.

If a double layer is applied, the second layer is preferably applied in the same direction as the first layer, hence the orientation of the substrate is preferably not switched from landscape to portrait and vice versa in case of applying two or more layers.

No restrictions exist in regard to the coating tool of the coating module except that said coating tool must be capable of applying a shear force onto the formulation to be coated onto the substrate.

Coating rollers and coating blades are preferred while coating blades with at least one edge are particularly preferred. Rollers, drum coaters, rod coaters, knife coaters, air knife coaters, gravure coaters, extrusion coaters, forward and reverse roll coaters are also preferred.

The film thickness of the formulation as applied onto the substrate is preferably controlled by an adjustment of the distance of the coating blade relative to the substrate surface. The film thickness to be achieved for a specific formulation on a specific substrate using a specific distance blade (or roll) to substrate is preferably calibrated as the actual film thickness as ultimately achieved after coating may differ from the simple geometric distance between the edge of the blade (or the outer diameter of the roll) to the substrate surface.

A set of different coating tools are available to allow a variation in film thickness. In a preferred embodiment of the invention, these coating tools, preferably coating blades, can be exchanged in an automated manner.

In accordance with a preferred embodiment of the present invention, the coating module comprises two or more coating tools, preferably coating blades, arranged parallel and/or next to each other in order to allow the coating of two or more parallel stripes on a substrate.

One type of coating tool preferably offers a fixed tool width for a plurality of stripes of the substrate In one particular configuration of this embodiment, some or all of the blades may be the same (Fig. 13 a). Another preferred type of coating tools comprises an arrangement of different tool widths for different stripes of the substrate (Fig. 13 b).

Furthermore, a coating tool is preferred that provides replaceable blades with an adjustable thickness for each stripe. According to this preferred embodiment, different substrate-distances for adjacent stripes can be realized by using a coating module with different coating tools of a different height (Fig. 13 c).

By using another embodiment of the coating tool, it is possible to generate film coatings of gradients, i.e. the thickness may be adjusted during the process of moving the blade across the substrate covered with the formulation.

In another preferred embodiment, contact blades are used to produce very thin coatings. Preferably, these contact blades have a roughness that can be adjusted and/or predetermined to correspond to or be similar to the roughness of the substrate.

In a preferred embodiment, at least one part of the movement of at least one coating tool relative to the substrate, preferably the *"tool down force"* is applied via a pneumatic drive, preferably a controlled and adjustable pneumatic drive.

In another embodiment according to the present invention, the coating module is equipped with a coating tool which comprises automatic adjustment means in regard to the distance of the coating blades to the substrate surface.

The following transfer speeds and application times are preferred: For reactive coatings, typical reaction times in industrial applications are in the range of 1 s to several seconds, typically 1 to 4 s are preferred. The minimum reaction time for reactive thin films as proposed on the platform should preferably be 0.5 s based on the transfer time from the coating application module to the first IR drying unit.

In case the coating tool comprises a coating blade, said coating blade preferably comprises a precision engineered blade (e.g. as shown in Figures 8 and 9).

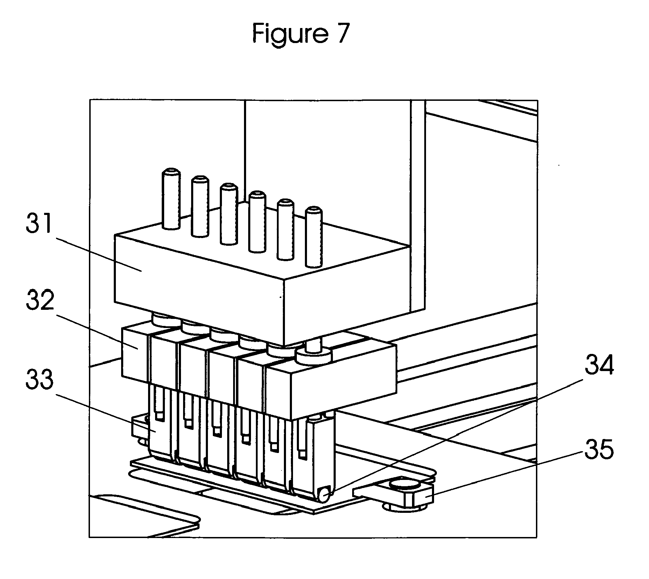

Drum shaped coating tools *("rollers")* are also preferred. Drum shaped coating tools are equipped with a coating device that preferably has a cylindrical form whereby the cylindrical surface preferably contains tiny grooves. The tools are also known as coating bars, rollers or bar coaters. This preferred embodiment of the coating tool is shown in Figure 7 wherein the coating tool comprises a coating roll (34), preferably a plurality of parallel coating rolls (34).

In another preferred embodiment, relating to all coating tools, the coating tool is segmented to allow the placement of elastic materials between at least two segments. The elastic material preferably reduces the edge effect thus resulting in better stripe qualities.

The elastic material is preferably sized in a way to contact the substrate surface at a constant pressure. Therefore, no or only minimal coating formulation can flow underneath the elastic edge protectors or further into the adjacent stripe. Because of the edge protection, all excess material can be efficiently removed from the stripe. The elastic material preferably is rubber or a polymer material.

Furthermore, each coating tool preferably has two reference points which have contact to the substrate during the coating process. The reference points allow the control means of the coating platform to follow the shape of the substrate, thus potentially being able to reduce in homogeneities caused by lack of flatness of the substrate.

In a preferred embodiment of the present invention, the substrate handling module picks up at least one coating tool from the corresponding storage area to position it above the substrate holder. After application of the formulation onto the substrate, the substrate holder is actuated and a relative movement between blade and substrate is generated, resulting in application of the coating. Preferably, this movement is generated pneumatically.

Preferably, following the coating, the coating tool is washed in several steps in a washing station and can then be re-used. Alternatively, the tool can be exchanged to apply a coating with a different blade (distance). A large number of coating tools is preferably made available simultaneously.

Coating tools are preferably tagged with individual codes, preferably barcodes, in order to be able to identify the coating tools.

In a preferred process of the present invention, a coating is applied as follows:
- the substrate has point contact with the substrate holder and is preferably fixed mechanically;
- the substrate holder is moved into the coating position;
- in case the substrate is not rigid enough, a supporting roll is preferably moved upwards until it touches the substrate from below;
- the coating tool is moved above the substrate and at least one reference point preferably makes contact with the substrate;
- the force that is applied by the coating tool onto the substrate is preferably controlled by a control unit of the coating platform;
- at least one formulation is applied, preferably injected by pipetting tips;
- the substrate holder is actuated and the coating starts;
- when the end of the substrate is reached, potential excess formulation is drawn into a waste trap, if necessary;
- the supporting roll is preferably moved downwards to avoid collision with the substrate holder.

While it is preferred in accordance with the present invention that the substrate holder is (preferably linearly) actuated while the coating tool remains stationery during the actual coating process, the process scenario (holder remains stationary while tool moves) is also well within the scope of the present invention.

According to another preferred embodiment of the present invention, a different substrate holder is used:
- the substrate is placed on the holder and fixed by vacuum forces applied to at least two edges of the substrate;
- the substrate holder is moved into the coating position;
- the coating tool is moved above the substrate and at least one reference point preferably makes contact with the substrate;
- the coating tool is placed onto the substrate, preferably applying a predetermined force;
- at least one formulation is applied;
- the substrate holder is actuated and the coating starts.

A substrate holder to be used to hold flexible substrates, i.e. substrates that are susceptible to shear and/or torsion by hand, is preferably equipped with a vacuum supply for holding the substrate in an essentially flat position.

In a preferred embodiment, the support roll is not coupled to the substrate holder and is preferably equipped with precision mechanics for moving the roll into the support position and re-moving the roll quickly after the coating application is finished. Preferably, two support rolls are provided, one for landscape mode and one for portrait mode.

Irrespective of what kind of substrate is used and how the process of coating is performed, the **drying** of the coating is preferably performed by IR drying. The drying temperatures are preferably in the range of 60°C to 120°C, however, for some applications a drying temperature of up to 250°C may be used. In case inorganic films are applied, the "drying" may be seen as "calcining" and temperatures of 500°C to 1000°C are preferred. The corresponding drying times preferably are in the range of 0.5 k/s to 10 k/s, i.e. in some cases the required heating rate may be 10 s to 100 s.

In a preferred embodiment of the coating platform as shown in the Figures, two IR heating modules are arranged above the substrate. Both IR heating modules can be operated independently from each other, whereby it is preferred that the heating units do not influence each other thermally.

In another preferred embodiment, an IR heating unit is placed below the substrate in order to heat said substrate from underneath and to mimic induction heating. Such an IR heating unit is provided in addition to the IR heating unit from above, whereby said additional module does not need to be installed permanently.

Furthermore, at least one IR heating unit may be flexibly installed and used for heating the substrate either from below or from above the substrate.

In case that the coating platform is equipped with more than one heating unit, it is preferred that the IR heating units are the same or similar (applicable IR heating units may be obtained from Advanced Photonics Technologies AG). For example, a transversal arrangement of nine emitters would have a length of 250 mm per IR unit. Each emitter having a power of 4.4 kW results in an overall power of to 39.6 kW for each heating unit.

In a preferred embodiment of the invention relating to the case of having more than one IR heating module, each of the IR modules preferably has a separate housing thus minimizing thermal distortions between adjacent modules. Furthermore, a parking station (position) for the substrate holder is preferably provided to manage the timing between the first and the second IR drying step. A preferred arrangement of the IR heating modules within the platform is shown in an exemplary embodiment in Figures 2 to 4.

The user can preferably design an arbitrary sequence for the operation of the IR units, as the (linear) transfer system of the present invention can be preferably operated bi-directionally.

During the design of the virtual library, the user preferably specifies processing parameters such as power for the IR units as well as the velocity/residence time of the substrate in the corresponding IR unit. Preferably, the user does not need to specify temperatures or temperature profiles as these are determined by the control unit.

In certain applications, the resulting substrate temperature and the temperature profile are important parameters to characterize the drying process. In such cases an accurate temperature measurement can be performed by different methods such as the use of calibration sheets.

Instead of, preferably in addition to, the before-described IR-curing, the coating(s) as applied can be subjected to another post-treatment step, preferably **UV curing.**

UV-curing is particular preferred in case organic coatings are processed, in particular organic coatings comprising polymers.

In a preferred embodiment of the platform according to the present invention, at least one UV curing unit is integrated into the platform. In a preferred embodiment, two UV curing units are integrated into the platform. An exemplary arrangement in which UV curing modules are integrated into the platform is shown in Figures 2 to 4. The curing times using UV curing preferably are in the range of 0.1 s to 2 s.

In a preferred embodiment, the UV curing module is covered by a housing.

In a preferred embodiment, a UV-transparent mask, preferably a quartz-mask, is placed onto the substrate holder to protect the substrate before the substrate holder enters the UV curing module. The volume between the substrate surface and the mask can be flushed with an inert gas as described below and the holder including mask may then be transferred into the curing unit and the coating may be cured.

In an embodiment according to the present invention, curing of the coating(s) is performed under inert conditions. In this context, it is preferred that the substrate holder is specifically adapted to maintain the substrate in contact with the inert gas for the entire period of curing. The inert gas is preferably supplied through the substrate holder to keep the mask design as simple as possible and to allow easy rotation of the mask for processing of the substrates, preferably in "landscape" and "portrait" mode.

In a preferred embodiment the substrate is labelled with at least one, preferably up to four codes, preferably (bar)**codes**, whereby the control unit registers the sample history which is related to a certain barcode.

The processes of the present invention, in particular the drying and/or curing may require some degree of **temperature control.** In a preferred embodiment of the present invention, temperature is measured with pyrometers, whereby defined measurement positions are used. The integration of a temperature measurement is a preferred tool for the optimization of process parameters. The result of the temperature measurement is read by the control unit and can be used as a parameter of process optimization.

It is possible that (bar)codes on substrates may be impaired during the IR heating or UV curing steps in case the treatment is performed at high temperatures and/or for a long period of time. The control unit is preferably pre-programmed to take account of the possible scenario that the (bar)coding might be impaired under certain experimental conditions. The control unit therefore labels the treated substrate with a new (bar)code after certain treatments. The substrate and the control unit are preferably designed in such a way that the substrate can be labelled with multiple (bar)codes.

The formulations to be applied are preferably stored in vials or vessels that are preferably labelled. In case the formulations originate from known sources, the corresponding vials/vessels are already bar-coded and known to the control unit (including database). If the formulations originate from external sources which are unknown to the control unit, these formulations have to be labelled and registered by the control unit before they can be used within the process. This applies also if the corresponding vials/vessels already carry some kind of barcode which is from a third party and which is not known to the control unit. The control unit does not handle external barcodes if they are not known to the control unit.

The importing processes as discussed in the following are preferably grouped into two different types of importing processes (whereby this applies to substrates, tools and formulations): The first type of importing process is used to announce new entities to the data management system (announcement of new entity to the system) and the second type of import process is used to check-in or register known entities (registration of known entity to be available within a job).

Importing formulations: The importing of formulations (known entity to be available within the job) preferably starts with reading the barcode of the respective vial/vessel containing the formulation. By querying the database, the material name will be read and displayed to the user. Next, the user should preferably enter the following information:
- viscosity class of the liquid for determining the aspirate and dispense speeds;
- position where the formulation should be placed. Positions will be numbered 1 to N;
- strategy for dispensing multiple droplets per stripe (either one needle per stripe with multiple dispense steps or one needle per droplet with one dispense step, i.e. multiple needles per stripe).

The user should also preferably provide a timeout for changing the disposable tip if the dispensed material does not change.

In case a pipetting robot is used and no liquid level detection is available on the pipetting robot, the control unit needs to calculate the liquid level. In that case, the control unit needs to know: the vial type (vial inner diameter) and the initial amount of formulation. Furthermore, this dialog will allow for setting the stirring speed and the target temperature of a multi-position heater/stirrer.

In a preferred embodiment, the sequence of importing a new formulation into the control unit (announcement of a new entity to the system) comprises:
- providing a material name, separate check-in of individual batches (charges);
- some comment or reference to a data source which is from a third party (optional);
- additional information such as names-value-pairs (optional);
- assignment of a internal barcode to the respective vial/vessel.

The implementation/import of a new formulation (announcement of a new entity to the system) is preferably performed either manually one by one or automatically using a imported file which is in a suitable file format (for example CVS file format).

Importing substrates: Preferably, the control unit differentiates between two logically distinct types of substrates which are handled within the coating platform, namely (i) substrates which have unique and individual properties already before starting the coating process (individual substrates). These substrates will be tracked one by one. The other type of substrates (ii) pertains to bulk material (bulk substrates). The latter type is preferably tracked by bar-coding the *box* in which the substrates are stored.

The importing of new substrates into the control unit (announcement of a new entity to the system) will reflect this difference. *Individual substrates* will be preferably imported using a import file (for example an import file in the CSV format). This file will preferably provide the following data:
- internal barcode which should be assigned to the substrate;
- substrate name and descriptive text;
- substrate thickness.

Individual substrates are preferably placed in a substrate holder. However, these generic substrates do not need to be imported one by one. It suffices to record the range of positions on which the individual substrates are stored.

*Bulk substrates* will be preferably imported (announcement of a new entity to the system) by:
- providing the material type (as read from a code or as a input given by the user);
- providing the substrate thickness (as read from a code or as a input given by the user);
- providing some comment or reference to a data source from a third party (optional);
- assigning an internal barcode to the box where the substrates are stored in (optional).

Additionally, it will be possible to assign additional substrate properties, preferably in the form of name-value-pairs. This function applies to individual substrates as well as bulk substrates (announcement of a new entity to the system).

Bulk substrates can be placed on a stack or in the magazine. In the magazine, different types of substrates can be placed at the same time. On a stack, only one type of substrates can be placed at a time.

In a preferred embodiment, and as part of the process step of designing a virtual library, the control unit analyzes the at least one coating job as provided by the user and/or as downloaded from a data file and provides the user with a list of formulations, substrates and coating tools which are required to execute the selected job. Items which are already on the platform and items which are missing will be preferably marked differently.

Importing coating tools: The importing procedure for coating tools preferably starts with reading the (bar)code of the coating tool. The control unit preferably determines the type of the coating tool. Then, the user preferably selects the position where the tool should be placed. During the importing of the coating tools, the user preferably has possibility to setup the cleaning procedure of the coating tools. This comprises selecting the washing stations and parametrizing the washing procedure (e.g. time and number of repetitions). The washing procedure preferably will be the same for all coating tools.

Parametrizing the coating process is preferably a two-stage-process with respect to a given coating job (or control unit cycle). This is because there are two different types of parameters, namely one type which can be chosen freely from stripe to stripe and the other which can only be changed from substrate to substrate. A third parameter relates to the hardware installation at the platform and which are not variable within a given coating control unit cycle.

Setting up stripe parameters: In a preferred embodiment, relevant stripe parameters are (i) the type of formulation, (ii) the formulation excess and (iii) the number of droplets per stripe. The value of formulation excess is the amount of formulation loaded onto a substrate divided by the amount of wet film formulation contained in the stripes which are produced on the corresponding substrate. A formulation excess of 1 would mean that the same amount of formulation is applied as will be contained in the wet film. A formulation excess of 0.8 means that only 80 % of the stripe volume will be filled with formulation. A formulation excess of 1.2 or 1.5 means are that a real excess of formulation material of 20 % and of 50 % is deposited onto the substrate.

A formulation excess value smaller than 1 (e.g. of 0.8) may be used to achieve a decreasing thickness of the stripe towards the end of the stripe.

The actual amount is calculated at run time by taking the stripe width (e.g. 14 mm) times the stripe length (e.g. 86 mm) times the stripe thickness (e.g. 20 µm) times the formulation excess. Setting up stripe parameters starts with selecting the coating geometry (for example 4 stripes portrait, 6 stripes landscape, 1 stripe portrait, 1 stripe landscape) and the number of coating steps. Next step is the selection of the formulations to use.

In a preferred embodiment, two distinct modes are available.

*Automatic mode:* The user selects one set of formulations per coating step. Software control unit will calculate the full factorial design as a virtual library of samples for each formulation from one set with every formulation from every other set. The resulting formulation combinations will be distributed automatically on the substrates. The user can chose to which extent the samples of the virtual library of the full factorial design are transformed into real samples. In case of highly complex coating applications the number of total samples in the virtual library could exceed the number of samples which are foreseen for the library of real samples. In such case the control unit contains *statistical tools* in order to reduce the number of experiments.

*Manual mode:* The user selects the number of substrates which should be coated. Now, the system queries the formulations to be used on each stripe for each substrate.

### Example A (automatic mode):

Six-stripe-geometry, two coating steps (i.e. two different layers): Formulation set number one consists of three different formulations (first layer of e.g. 10 µm wet film thickness for all stripes): A, B, C and formulation set number two consists of four different formulations (second layer of for example 20 µm wet film thickness for all layers): 1, 2, 3, 4.

The system automatically creates the twelve different combinations of double layers (A1, A2, A3, A4, B1, ..., B4, C1, ... C4) and distributes them on two substrates resulting in twelve different stripes (see coating given for Example B in the table below).

### Example B (manual mode):

Six-stripe-geometry, two coatings, two substrates software control unit will query explicitly the formulations to use for each stripe on each substrate. The resulting query and the user's response are summarized as follows:

| **Software control unit query** | **User input** |
|---|---|
| formulation for stripe 1, substrate one | first formulation A, next formulation 1 |
| formulation for stripe 2, substrate one | first formulation A, next formulation 2 |
| ... | ... |
| formulation for stripe 6, substrate one | first formulation B, next formulation 2 |
| formulation for stripe 1, substrate two | first formulation B, next formulation 3 |
| ... | ... |
| formulation for stripe 6, substrate two | first formulation C, next formulation 4 |

Setting up curing parameters: Setting up curing parameters is preferably a two-step-process. First, the user defines a curing template. The curing template preferably specifies, which process steps should be executed in which order. However, based the user's choice, process parameters can be left blank. Preferred process steps supported by the coating process are summarized in the following table:

| **Process step** | **Parameters** |
|---|---|
| **COAT** | selection of coating tool, force with which the tool is pressed onto the substrate *("tool down force"),* coating speed (given in m/s), rest period. |
| **IR-HEAT** | power (device min to 100%), duration time of substrate under irradiation, mode of irradiating the substrate (smooth mode where the sample passes heating module with constant velocity and rough mode where sample stops for a defined time under irradiation of the heating source), distance of the source of radiation to substrate, rest period (rest period is the period out of the irradiation module). |
| **BACK-HEAT** | power (device min to 100%), duration, strategy, rest period, distance to the substrate. |
| **UV-CURE** | power (device min to 100%), duration, strategy, in or out of focus, bulb type (UVA, UVB or frequency between UVA and UVB), inert gas atmosphere (yes/no), rest period. |
| **WAIT** | idle time. |
| **COOL** | duration, cool with air, cool with heated or tempered air. |

**COAT:** The coating parameters which can only be changed from one substrate to another are part of the curing template. These coating parameters preferably are the coating tool, the tool down force and the coating speed. The coating speed is one of the key parameters in case **reactive coating formulations** are investigated. The time between the deposition of the formulation and the coating is preferably short and precisely controlled. An advantage of the present invention is that the time between the application of the formulation and the coating is in the range of 0.5 s. Consequently, it is possible to handle and apply highly reactive formulations as coatings.

**IR-HEAT:** IR drying using the IR emitter. Depending on the coating applied, a processing decision can be made as to whether the substrate moves as fast as possible in into and out of the IR device with a waiting time in between or alternatively moves through the emitter smoothly without accelerating or decelerating.

Alternatively, air drying can also be implemented (cf. "Cool" process step). High temperature air is preferably used at predefined relative humidity.

**BACK-HEAT:** Simulated induction heating by using an IR emitter from underneath. Parameters are the same as with IR-HEAT. Back heating can be applied simultaneously to IR heating or it can be used alternatively to IR heating.

**UV-CURE:** UV curing using the UV emitter. Processing is the same as with IR-HEAT. The parameter inert selects whether the protection cover is placed on the substrate before curing or not. The UV radiation can be applied by having the substrate in focus of the radiation (exposing the substrate to concentrated radiation energy) or having the substrate out of focus of the radiation (exposing the substrate to diffuse radiation energy).

**WAIT**: Specifies an idle time in one of the rest areas along the linear track.

**COOL**: Specifies a cooling period in a constant stream of pressurized air having ambient temperature.

The distance of the source of radiation to substrate is a parameter which is preferably determined by the hardware configuration. It is possible to use a radiation source which is movable and adjustable by the software in such a way that the distance between source and substrate can be changed during a single control unit cycle.

In a preferred embodiment the platform comprises more than one radiation module for IR heating and UV curing since these different modules can be built with as a set of different settings (for example in case the radiation source cannot be moved by the control unit control); for example, by having a first fixed distance for the first IR heating and another fixed distance for the second IR heating. Multiple IR heating and UV curing modules are technically more easy to set-up than movable radiation sources. Changing of the position of the radiation sources during the control unit cycle would also take time which could slow down the coating process. By having a set of heating modules and/or UV curing modules with different given settings, it is possible to operate the associated parameters of these modules as software controlled parameters by moving the substrate to the selected heating or curing module which can perform the desired treatment.

Preferably, the form of the IR heating bulb is oblong. Preferably, the heating bulbs are arranged in line with the moving direction of the substrate, i.e. perpendicular to the moving direction of the substrate The way the heating bulb is oriented with respect to the substrate has an influence on the homogeneity with which the substrate is irradiated. In case that there are several curing modules, it is preferred that the user is able to chose the bulb orientation (parallel or perpendicular with respect to the sample). The standard setting preferably comprises a parallel orientation of the bulb source with respect to the substrate since this more closely resembles the industrial production process.

Setting up a substrate library: A substrate library is a collection of fully parameterized coating procedures including the corresponding curing settings. The combination of a set of stripes on a single substrate with the corresponding curing procedure is called a recipe. To create such a substrate library, the user preferably performs at least one of the following steps, preferably all of them, i.e. the user
- selects a set of stripe parameters defined as described above;
- selects a curing template;
- expands the curing template, since there may be some curing parameters left blank;
- selects the substrates which are to be coated;
- defines library global parameters (substrate storage location after coating - stack or magazine; used coating table - vacuum or clamp table);
- adds the substrate library to either a new or an existing job.

Expanding the curing template can be done using either a design of experiments or a manual expansion. In the latter case, the user provides a list of curing parameters (e.g. a set of IR power settings) thus expanding the curing template to a set of curing procedures. The number of substrates needed to process the library will preferably be calculated based on a full factorial combination of each set of stripes with every curing procedure. The substrate selection will be either a list of individual substrates or one type of bulk substrates. In the first case, the order of substrates will be relevant, since the processing order is well defined. Curing parameters are modified first, coating parameters second. Example: Given the set of stripes A, B, C and the curing procedures 1, 2, 3. In this case, the processing sequence will be A1, A2, A3, B1, B2, B3, C1, C2, C3.

Executing a coating job of the coating platform (running a complete coating cycle): In order to execute a coating job using the control unit, the user preferably logs in to the database and downloads the job. The control unit control will analyze the job and provide the user with a list of required substrates, formulations and coating tools as well as required platform settings. By checking in those items as described above, the user prepares the platform. It may be necessary to specify additional settings like coating tool cleaning parameters and whether formulations are stirred and/or heated. The actual job execution preferably occurs automatically. During run-time the user will preferably have the option
- to delete recipes which have not yet started,
- to suspend and resume job execution,
- to abort job execution.

If an error occurs, job execution will preferably automatically be suspended. After fixing the error, job execution can be resumed. If the error affected a recipe executed on a bulk substrate, the recipe will be re-executed on another substrate of that type. If the error affected a recipe on an individual substrate, this recipe will be skipped. After completion of the job, the platform will automatically apply new barcodes to the substrates if necessary and will upload the job results to the software control unit.

### Reference Signs:

- 011, 011' -: encoding (barcode)
- 01 -: Substrate
- 10 -: Substrate handling module
- 11, 11' -: Substrate stacks
- 12 -: Substrate magazine
- 13 -: Barcode applicator
- 14 -: Barcode reader
- 16 -: Robot arm
- 17 -: Substrate holder in active position
- 18 -: Substrate holder in parking position
- 20 -: Formulation handling module
- 21 -: Pipetting arm / liquid dispenser
- 22, 22' -: Positioning racks
- 23 -: Disposable tips
- 24 -: X-stage for the Pipetting robot
- 25 -: Tip washing
- 26 -: Washing station
- 27 -: Coating tools
- 30 -: Coating module
- 31 -: Upper part of the coating module
- 32 -: Holder for the coating tool
- 33 -: Coating tool
- 34 -: Coating roll
- 35 -: Clamp for fixating the substrate onto the substrate holder
- 37 -: Supporting roll
- 40, 40' -: IR heating modules
- 50, 50' -: UV curing modules
- 60 -: Transfer module
- 201 -: Dispensing unit
- 202 -: Pipetting needle
- 203 -: Disposable/replaceable tip
- 301 -: Protrusion
- 302 -: Block
- 303 -: Distance spacer
- 304 -: Coating blade
- 305 -: Edge of coating blade

## Claims

1. Coating **platform** for the automated application of at least one coating on a plurality of substrates, wherein said coating platform at least comprises:
• at least one substrate handling module for handling a plurality of substrates before and/or after a coating process, wherein the substrate handling module comprises at least one means for reading identification codes on substrates;
• at least one coating module comprising at least one coating tool for applying a shear force onto a formulation as applied onto the substrate and/or as being in physical contact with said substrate;
• at least one transfer module for the transfer of a plurality of coated and/or uncoated substrates from at least one part of the coating platform to at least one other part thereof;
• at least one means for drying and/or curing the plurality of coated substrates.

2. Coating platform according to claim 1, wherein the coating platform furthermore at least comprises at least one of the following:
• at least one formulation handling module for applying at least one formulation onto at least one substrate;
• at least one means for the analysis of the plurality of coated substrates;
• at least one module for performing surface activation of at least one coated substrate;
• at least one means for encoding a plurality of substrates;
• at least one control unit.

3. Coating platform according to claim 1 or 2, wherein the transfer system is a high speed transfer system, further preferably a high speed linear transfer system.

4. Coating platform according to any one of the preceding claims, wherein the transfer system comprises at least one substrate holder for holding at least one substrate.

5. Coating platform according to any one of the preceding claims, wherein the formulation platform and/or the formulation handling module comprises at least one dispensing unit.

6. Coating platform according to claim 5, whereon said dispensing unit is brought in close proximity to the substrate that is to be coated, whereby *"close proximity*" means less than 5 cm, preferably less than 2 cm, further preferably less than 1 cm, further preferably less than 5 mm.

7. Coating platform according to any one of the preceding claims, wherein the coating module comprises at least two coating tools and/or at least two dispensing units arranged in a manner that facilitates or enables the application of a plurality of parallel stripes on at least one substrate.

8. Coating platform according claim 7, wherein the formulation platform comprises at least two parallel dispensing units that can dispense the same formulation onto the substrate resulting in a uniformly coated substrate or that can dispense at least two different formulations onto the substrate resulting in at least two parallel stripes of different coatings on the same substrate.

9. Process for applying at least one, preferably two or more, coating(s) on a plurality of substrates in an automated process comprising at least the following steps:
• providing at least one formulation, a plurality of substrates, at least one substrate handling module, at least one coating module comprising at least one coating tool, at least one transfer system and at least one means for drying and/or curing a plurality of coated substrates.
• executing at least one cycle of coating a plurality of substrates comprising the sub-steps of
o applying at least two formulations onto at least one substrate, or applying at least one formulation onto at least two substrates;
o drying of the applied coating(s),
o optional curing of the applied coating(s);
o application of at least one identification code on at least one coated substrate.

10. Process according to claim 9 further comprising at least one of the following steps:
• implementing a virtual design of a library of coated substances using at least one control unit;
• at least one experimental design step and/or at least one data management step.

11. Process according to claim 10, wherein the virtual design of the library and/or the experimental design preferably comprises the generation of at least one coating recipe and/or the importation of at least one selected coating recipe for at least one job that is to be executed by the platform.

12. Process of any one of claims 9 - 11, wherein the coating is preferably organic or inorganic or any mixture of both.

13. Process according to any one of claims 9 - 12, wherein coating tools are automatically exchanged and/or cleaned between cycles of coating.

14. Process according to any one of claims 9 - 13, wherein at lest one formulation is applied over the full width of the substrate or wherein at least one formulation, preferably two or more different formulations are applied at predetermined regions of the substrate, preferably in the form of stripes, further preferably with a gradient.

15. Process according to any one of claims 9 - 14, wherein at least two parallel dispensing units are provided, which can dispense the same formulation onto the substrate resulting in a uniformly coated substrate, or which can dispense at least two different formulations onto one substrate resulting in at least two parallel stripes of different coatings on the same substrate.

16. Process according to any one of claims 9 - 15, wherein the process is a high speed process meeting at least one, preferably all, of the following processing conditions:
(i) a transfer velocity of a (coated or uncoated) substrate from at least one unit of the platform to at least one other unit of at least 1 m/s;
(ii) a transfer time between coating and drying of no more than 15 sec, preferably no more than 5 sec, further preferably no more than 1 sec;
(iii) an acceleration of the drive of the transfer system of at least 2 g.

17. Process according to any one of claims 9 - 16, wherein the step of applying at least one formulation comprises at least one of the following: rod coating, blade coating, knife coating, air knife coating, gravure coating, forward and reverse roll coating, extrusion coating.

18. Process according to claim 14 or 15, wherein at least two different formulations are applied one on top of the other with an angle between the two resulting layers, preferably stripes, preferably an orthogonal angle.

19. Process according to claim 18, wherein additionally a gradient is applied in regard to the thickness of at least one layer.
